(19) Europäisches Patentamt
European Patent Office
Office européen des brevets

(11) **EP 4 016 368 A1**

(12) **EUROPEAN PATENT APPLICATION**

(43) Date of publication:
**22.06.2022 Bulletin 2022/25**

(21) Application number: **21215661.6**

(22) Date of filing: **17.12.2021**

(51) International Patent Classification (IPC):
***G06F 30/23*** (2020.01)     *G06F 111/04* (2020.01)
***G06F 111/10*** (2020.01)

(52) Cooperative Patent Classification (CPC):
**G06F 30/23;** G06F 2111/04; G06F 2111/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **18.12.2020   US 202017126456**

(71) Applicant: **Dassault Systemes Simulia Corp.
Johnston, RI 02919 (US)**

(72) Inventors:
• **Harkness, Harrington
  Johnston (US)**
• **Eshraghi, Hossein
  Johnston (US)**
• **Haratian, Hosein
  Johnston (US)**

(74) Representative: **Bandpay & Greuter
30, rue Notre-Dame des Victoires
75002 Paris (FR)**

(54) **METHOD FOR FAST DETECTION OF UNCONSTRAINED MOTION AND LOW-STIFFNESS CONNECTIONS IN FINITE ELEMENT MODELING**

(57)     A computer implemented method is configured to detect an unconstrained or low-stiffness connection between parts of an initial finite element (FE) model in a computer aided drafting (CAD) application. A stiffness matrix of the initial FE model is transformed into a reduced stiffness matrix. A singular mode is determined in the reduced stiffness matrix. The plurality of singular mode is identified as corresponding to an unconstrained or low-stiffness connection between parts of the FE model.

FIG. 2

EP 4 016 368 A1

**Description**

Inventors: Harrington Harkness, Hossein Eshraghi, Hosein (Merhdad) Haratian

FIELD OF THE INVENTION

The present invention relates to development of model simulations, and more particularly, is related to detecting unconstrained motion and low-stiffness connections between parts in a finite element model.

BACKGROUND OF THE INVENTION

Normal mode analysis of a modeled mechanical system determines characteristic vibration shapes (normal modes) and corresponding natural frequencies of the model. An unconstrained or low-stiffness connection between parts in a finite element model may indicate that at least one feature of the mechanical system has not been properly accounted for by the finite element model. Therefore, it is desirable to quickly detect and correct those modes in a finite element model.

When testing a finite element model of a mechanical system, it may be difficult to detect and identify unconstrained or low-stiffness connection between parts, particularly during initial testing. Common methods for systematically determining unconstrained or low-stiffness connection between parts of a finite element model includes performing a natural frequency extraction simulation of the finite element model to identify deformation modes with zero frequency. For example, natural frequency extraction for a finite element model is discussed in the SIMULIA User Assistance documentation section, "Abaqus > Analysis > Analysis Procedures > Dynamic stress/displacement analysis > Natural frequency extraction."

Another method for systematically determining unconstrained or low-stiffness connection between parts of a finite element model is performing a singular value decomposition of a stiffness matrix of the finite element model. For example, the singular value decomposition technique is discussed in https://en.wikipedia.org/wiki/Singular value decomposition. A third method for systematically determining unconstrained or low-stiffness connection between parts of a finite element model involves exploring the singular points coming from a lower-upper (LU) decomposition of the stiffness matrix of the finite element model. For example, LU decomposition is discussed in https://en.wikipedia.org/wiki/LU decomposition. An example of a commercial modeling platforms providing LU decomposition tools is discussed here: https://help.solidworks.com/2020/english/solidworks/cworks/hidd contact visualization plot.ht m

Unfortunately, each of these approaches involves significant computational time and resources. For example, it is common for finite element models to involve n x n stiffness matrices where "n" is in the millions, such that the computational time for the methods listed applied to the n x n system of equations may be over an hour. Further, most finite element analysts generally do not perform a natural frequency extraction or singular value decomposition prior to carrying out their intended simulation to check if any unconstrained or low-stiffness connection between parts exist.

A fallback method for determining unconstrained or low-stiffness connection between parts in a finite element model is for the analyst to try to run the desired static or other simulation, and the simulation either aborting with a cryptic message about singular models or possibly reporting an unrealistic solution. In the course of diagnosing the problem, the analyst may eventually determine the source of the problem is an unconstrained displacement mode. Therefore, there is a need in the industry to address one or more of these shortcomings.

SUMMARY OF THE INVENTION

Embodiments of the present invention provide a method for fast detection of unconstrained motion and low-stiffness connections between parts in finite element modeling. Unconstrained motion and low-stiffness connections between parts are often problematic in finite element modeling. Quickly bringing these modes to a finite element analyst's attention (or automatically resolving these issues) increases the usability and robustness of finite element modeling software.

Briefly described, the present invention is directed to a computer implemented method configured to detect modes associated with unconstrained motion and low-stiffness connections between parts of an initial finite element (FE) model in a computer aided drafting (CAD) application. A stiffness matrix of the initial FE model is transformed into a reduced stiffness matrix and a collection of singular modes and corresponding singular values associated with the reduced stiffness matrix is determined. Any singular modes with a corresponding zero (or very small) singular value are identified as corresponding to an unconstrained mode of the FE model. For users that request having modes associated with low-stiffness connections between parts brought to their attention, the software would also identify singular modes with low singular values. Modes could be brought to the user's attention in graphical form. Optionally, stabilization methods could be automatically invoked to overcome unconstrained motion or increase the connection stiffness between parts.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.

FIG. 1A is a schematic diagram of finite-element representation of a three-part assembly under a first exemplary embodiment of the present invention.
FIG. 1B is a schematic diagram of a reduced system representation of the finite-element representation of FIG. 1A.
FIG. 2 is a flowchart of an exemplary method for transforming an original stiffness matrix of the original finite element model of FIG. 1A to a reduced stiffness matrix for the reduced system of FIG. 1B.
FIG. 3 is a schematic diagram showing an example of an individual contact constraint.
FIG. 4 is a flowchart 400 for an exemplary embodiment of a method for FE modeling.
FIG. 5 is flowchart detailing steps for identifying singular modes in the method of FIG. 4.

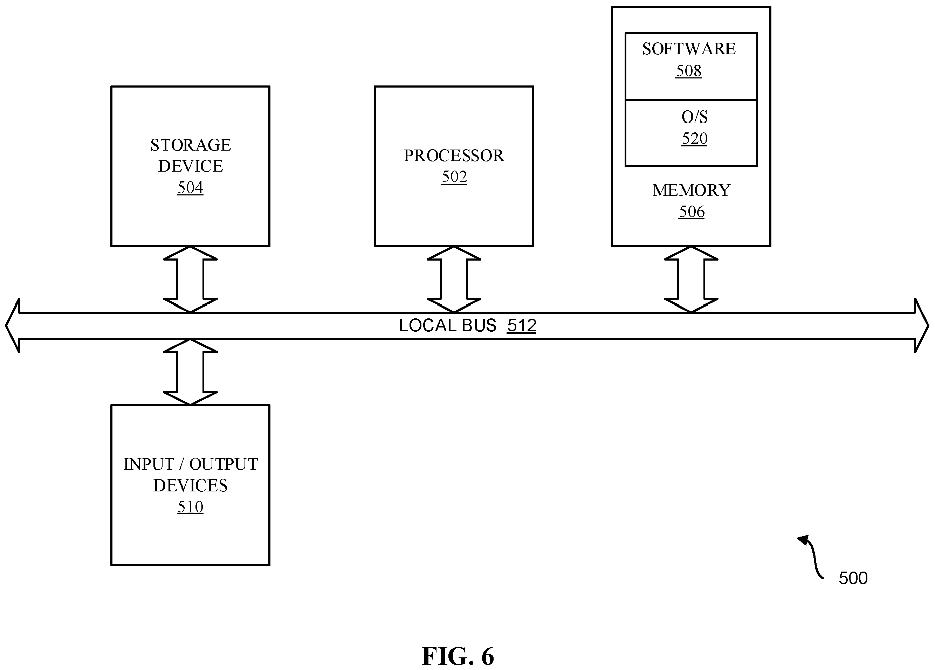

FIG. 6 is a schematic diagram illustrating an example of a system for executing functionality of the present invention.

DETAILED DESCRIPTION

Embodiments of the present invention provide a low computational method for identifying unconstrained motion and low-stiffness connections between parts prior to simulation.

The following definitions are useful for interpreting terms applied to features of the embodiments disclosed herein, and are meant only to define elements within the disclosure.

As used within this disclosure, "finite element method" refers to a widely used method for analyzing and solving problems of engineering using mathematical models, for example models of a mechanical structure. The finite element method is a particular numerical method for solving partial differential equations in two or three space variables (i.e., some boundary value problems). To solve a problem, the finite element method subdivides a large system into smaller, simpler parts that are called finite elements. This may be achieved, for example, by a particular space discretization in the space dimensions, implemented by the construction of a mesh of the object with a finite number of points encompassing the numerical domain for the solution. The finite element method formulation of a boundary value problem finally results in a system of algebraic equations. The simple equations that model these finite elements, referred to as a finite element model, are then assembled into a larger system of equations that models the entire problem. The finite element method then uses variational methods from the calculus of variations to approximate a solution by minimizing an associated error function. Mathematically, physical properties of the mechanical system forming the basis of the finite element model may be represented numerically, for example, by a stiffness matrix and/or a mass matrix. Deformed as well as unconstrained modes of the mechanical system may be determined from the stiffness matrix.

As used within this disclosure, "unconstrained motion" and "unconstrained mode" refer to a condition where a part within a finite element model is free to move in a certain direction without restriction.

As used within this disclosure, a "penalty stiffness" refers to application of a large stiffness to ensure the desired/expected displacement.

In numerical analysis and linear algebra, "lower-upper (LU) decomposition" or factorization factors a matrix as the product of a lower triangular matrix and an upper triangular matrix. The product sometimes includes a permutation matrix as well. LU decomposition can be viewed as the matrix form of Gaussian elimination. Computers usually solve square systems of linear equations using LU decomposition, and it is also a key step when inverting a matrix or computing the determinant of a matrix. LU decomposition was introduced by Polish mathematician Tadeusz Banachiewicz in 1938. A simple example of a singular matrix is $\begin{bmatrix} 1 & 1 \\ 1 & 1 \end{bmatrix}$. The LU decomposition of the singular matrixes:
$$\begin{bmatrix} 1 & 1 \\ 1 & 1 \end{bmatrix} = \begin{bmatrix} 1 & 0 \\ 1 & 1 \end{bmatrix} \begin{bmatrix} 1 & 1 \\ 0 & 0 \end{bmatrix}$$
. The 0 diagonal entry of the U matrix (lower left hand corner of final matrix), is an indication of a singularity (and in the context of this disclosure, an indication of an unconstrained mode).

In linear algebra, the singular value decomposition (SVD) is a factorization of a real or complex matrix that generalizes the eigen decomposition of a square normal matrix to any m x n matrix via an extension of the polar decomposition.

Reference will now be made in detail to embodiments of the present invention, examples of which are illustrated in the accompanying drawings. Wherever possible, the same reference numbers are used in the drawings and the description to refer to the same or like parts.

Exemplary embodiments of the present direction are directed to systems and methods for quickly identifying unconstrained motion as well as low-stiffness connections between parts of a finite element model. These embodiments make it practical to automatically invoke a method to determine unconstrained parts, or to identify connections between parts which are weak in strength prior to running the desired simulation such that the corresponding modes can be reported to the simulation analyst for applying proper restrains or strengthening of the weak connections. Once those undesirable modes are identified it is often intuitive for the analyst to adjust the finite element model to restrain them.

As noted in the Background section, methods for systematically determining unconstrained and/or low-stiffness connection between parts of a finite element model have previously required significant computational time. Exemplary embodiments of the present invention include a faster approach that automatically invokes an SVD method to determine modes with small singular values corresponding to an unconstrained motion modes (or low-stiffness connections) prior to running the desired simulation, such that those modes can be reported to the simulation analyst to resolve. Once the method has identified one or more such undesirable modes, it is often intuitive for the analyst to adjust the finite element model to restrain the corresponding part(s) or repair the involved low-stiffness connections. In particular, the identified unconstrained modes may be resolved automatically, for example, with stabilization methods.

As described in further detail below, under the embodiments a stiffness matrix associated with a finite element model is temporarily transformed to a simplified stiffness matrix. For example, the simplified stiffness matrix may be much smaller than the full finite element model stiffness matrix, typically with just three displacement degrees of freedom and three rotational degrees of freedom per part. The unconstrained modes and/or very low-stiffness connection between parts of the reduced (simplified) stiffness matrix are evaluated. Degrees of freedom associated with the reduced stiffness matrix represent displacements and rotations of individual parts, such that modal stiffnesses of the reduced stiffness matrix correspond to resistances to relative translations or rotations among parts. Zero resistance to a mode of relative translation or rotation among parts indicates unconstrained motion. Very low resistance associated with a mode of relative translation or rotation among parts indicates very low connection stiffness. Note that resistances to relative translations and rotations among parts could be computed directly from the original stiffness matrix, but at much larger computational effort compared to computing these resistances via a reduced stiffness matrix

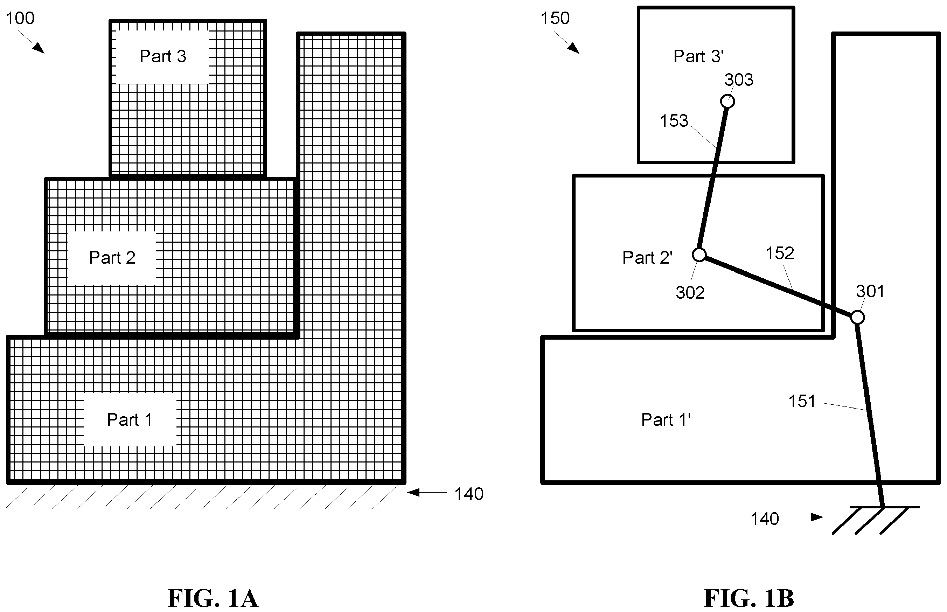

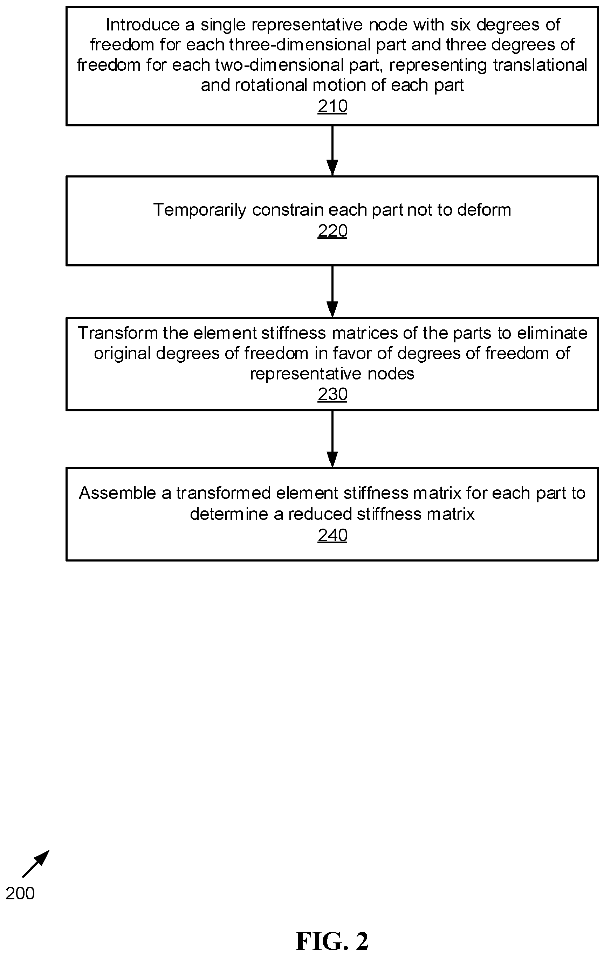

An exemplary first embodiment of a simple two-dimensional model is shown in FIGS. 1A-1B. An original finite-element representation 100 of a three-part assembly is shown in FIG. 1A. Each of a first part 1, a second part 2, and a third part 3 includes a number of subcomponents that interrelate internally and externally according to the original finite element representation 100. For descriptive purposes, each square of the grid represents one subcomponent of each part 1, 2, 3. As described below with reference to FIG. 2, the original finite-element representation 100 is temporarily transformed to a reduced system representation 150, with a simplified first part 1', a simplified second part 2', and a simplified part 3' as shown by FIG. 1B with one point per part. The reduced system 150 is quickly evaluated to determine if the reduced system 150 contains one or more unconstrained and/or low-stiffness connection between parts (which would also exist in the original finite-element representation 100). The original system 100 includes 1) a finite element mesh of each part 1, 2, 3, 2) connections between the parts 1, 2, 3 where they touch, and 3) connections to ground 140 along a bottom edge of the first part 1. Transformation to the reduced system 150 is facilitated by enforcing connections (creating a representative stiffness for the simplified model) between the simplified parts 1', 2', 3' and the connections to ground 140 with a finite "penalty" stiffness. Upon transformation of the connections existing in the original finite element model system 100 to the reduced system, the reduced system 150 includes a third stiffness 153 between part 3' and part 2', a second stiffness 152 between part 1' and part 2', and a first stiffness 151 from part 1' to ground.

If the connections between parts in this example represent frictionless contact, part 3' will exhibit an unconstrained sliding mode, which will be reflected by zero stiffness in that mode, as predicted by the singular value decomposition algorithm applied to the reduced system 150. In this three-part, two-dimensional example, the reduced system of equations involves 9 degrees of freedom, and computational time required to identify the unconstrained mode is small, typically a small fraction of a second.

FIG. 2 is a flowchart of an exemplary method 200 for transforming an original stiffness matrix of the original finite element model 100 to a (much smaller) reduced stiffness matrix for the reduced system 150. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

As shown by block 210, a single representative node represented by 301, 302, 303 in FIG. 1B with six degrees of freedom is introduced for each three-dimensional part and three degrees of freedom for each two-dimensional part, representing translational and rotational motion of each part. Here, each part 301, 302, 303 is modeled as a rigid entity. Each part is temporarily constrained not to deform, as shown by block 220. The element stiffness matrices are transformed to eliminate original degrees of freedom in favor of degrees of freedom of the representative nodes 301, 302, 303, based on consideration of imagined rigid beams 151, 152, 153 connecting the representative node 301, 302, 303 of a part to each original node of the same part, as indicated by block 230. An exemplary description of the transformation process is given in "Concepts and Applications of Finite Element Analysis", Second Edition, pp. 159-161, Robert D. Cook, John Wiley & Sons, 1981. Transformed element stiffness matrices are assembled to determine the reduced stiffness matrix, as shown by block 240.

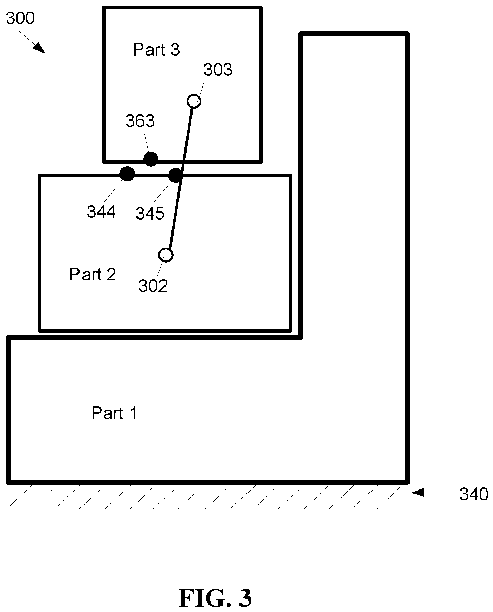

Most finite elements belonging to a single part (including most elements of a finite element model) have zero contribution to the reduced stiffness matrix and need not be processed to determine the reduced system of equations. Only finite elements associated with connections and contact between parts and connections to ground are considered in creating the reduced system of equations. FIG. 3 shows an example of an individual contact constraint involving nodes 344, 345, and 363. The transformation process converts this interaction to a stiffness between points 302 and 303 of the reduced system 300. Likewise, other contact constraints between parts 2 and 3 are transformed into contributing to stiffness between points 302 and 303. Similarly, the transformation process converts stiffness to ground along the bottom edge of part 1 into stiffness to ground 340 at point 301 of the reduced system 300. In some cases, it may be convenient to retain additional degrees of freedom in the reduced stiffness matrix. If the contact definitions between parts in FIG. 3 are replaced with physical low-stiffness springs, then there may be limited relative motions between the parts based on the strength (stiffness) of the springs. In similar manner, the transformation process converts these interactions to a stiffness between points 302 and 303 of the reduced system 300. However, the singular values corresponding to those modes will be non-zero and will reflect the strength of those springs. Based on the magnitude of these low-stiffness singular values, a decision may be made as to whether increase or reduce the spring stiffness to satisfy the product requirements. Similar technique can be applied for other types of connectors including those with rotational functionality by replacing the connector with point(s) representing rotational capability, and then reducing parts stiffness between each part representative point and the connector representative point.

Once the reduced stiffness matrix is formed, the embodiment uses familiar singular value decomposition methods, for example, to quickly determine the singular modes of the reduced stiffness matrix. These singular modes correspond to modes of unconstrained motion of the original system. The computational time for carrying out the singular value decomposition on the reduced stiffness matrix is typically on the order of one second or less (much more efficient than performing singular value decomposition on the original stiffness matrix). For example, in a 10-part assembly model, the reduced stiffness matrix may involve a stiffness matrix of dimensions 60 x 60, whereas the original stiffness matrix is typically many orders of magnitude larger (for example could be 1 million x 1 million).

In a preferred implementation of the embodiment, finite element simulation (or interactive preprocessing) software is modified to automatically compute any unconstrained motion modes as well as modes associated with low-stiffnesses connections.

If any unconstrained displacement modes are identified with the reduced stiffness matrix, they may be reported to the user for interactive resolution or perhaps resolved automatically, for example, by adding artificial stiffness or damping. Once displacement modes are resolved, the simulation proceeds using the original (unreduced) stiffness matrix.

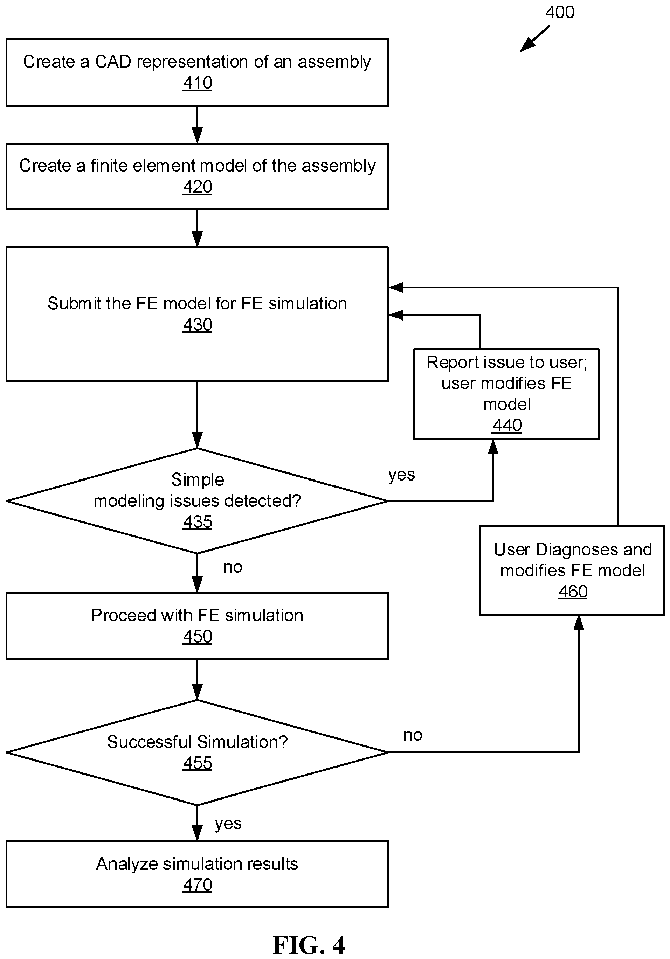

FIG. 4 is a flowchart 400 for an exemplary embodiment of a method for FE modeling. A computer aided drafting (CAD) representation of an assembly is created, as shown by block 410. A finite element (FE) model of the assembly is created, as shown by block 420. The FE model is submitted for FE simulation, as shown by block 430. The FE simulation determines if simple modeling issues (unconstrained modes) are detected, as shown by block 435. If a simple modeling issue is detected in the FE simulation, the issue is reported to a user (for example, via an alert box or other user interface mechanism), whereby the user may modify the FE model as shown by block 460, and the user submits the modified model for FE simulation, as shown by block 430.

If a simple modeling issue is not detected in the FE simulation, the FE simulation proceeds, as shown by block 450, to a successful or unsuccessful conclusion, as shown by block 455. If the FE simulation is successful the user analyzes the simulation results, as shown by block 470. If the FE simulation is not successful, the user diagnoses and modifies the FE model, as shown by block 460, and submits the modified model for FE simulation, as shown by block 430.

The flowchart 400 shows a typical sequence for FE modeling, with two points in the flow (blocks 435 and 455) where the user may need to address issues in the model. Some FE modeling issues are specifically detected by the FE program and pointed out to the user after block 435. Other types of modeling issues may not be immediately evident and may require additional processing times and/or are less directly identified by the FE program after block 455. Unconstrained (or low-stiffness) motion issues for static FE simulations have been of the latter classification. The embodiments allow unconstrained/low-stiffness connection between parts to be quickly and specifically identified as part of simple-modeling-issue checks. For example, if the 3-part example of FIGS. 1A-B, 2 has an unconstrained horizontal translation mode of part 3 associated with frictionless contact, then the method described above involving transformation to a reduced system may quickly identify this unconstrained mode, and report the unconstrained mode back to the user. Once an unconstrained mode is shown to the user, deciding how to modify the model is often intuitive. Optionally, the simulation software may suggest or automatically invoke methods to stabilize these modes.

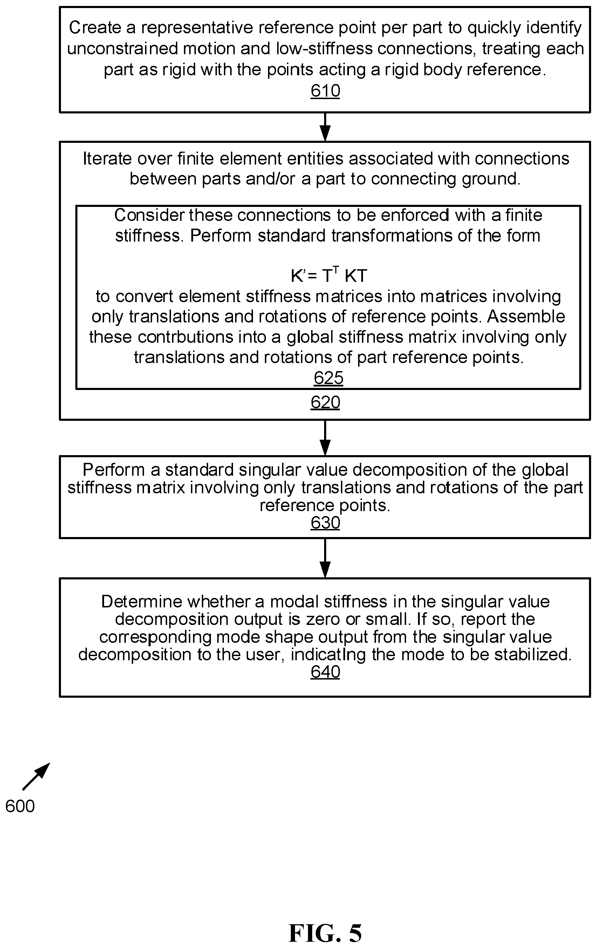

FIG. 5 is flowchart 600 illustrating a method for identifying singular modes in a multiple part FE model. A representative reference point is created for each part of the multiple part FE model to quickly identify unconstrained modes, treating each part as rigid with the points acting a rigid body reference, as shown by block 610. The finite element entities associated with connections between parts and part connected to ground are iterated, as shown by block 620. As shown by block 625, these connections are considered to be enforced with a finite stiffness. Standard transformations of the form

$$K' = T^T KT \text{ (Eq. 1)}$$

are performed to convert element stiffness matrices into matrices involving only translations and rotations of reference points. These contributions are assembled into a global stiffness matrix involving only translations and rotations of part reference points.

A standard singular value decomposition is perfomed on the global stiffness matrix involving only translations and rotations of the part reference points, as shown by block 630. As shown by block 640, If a modal stiffness in the singular value decomposition output is zero or small. If so, report the corresponding mode shape output from the singular value decomposition is reported to the user, indicating the mode to be stabilized.

The present system for executing the functionality described in detail above may be a computer, an example of which is shown in the schematic diagram of FIG. 5. The system 500 contains a processor 502, a storage device 504, a memory 506 having software 508 stored therein that defines the abovementioned functionality, input and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a macroprocessor, or generally any device for executing software instructions.

The memory 506 can include any one or combination of volatile memory elements (e.g., random access memory (RAM, such as DRAM, SRAM, SDRAM,

etc.)) and nonvolatile memory elements (*e.g.,* ROM, hard drive, tape, CDROM, *etc.*). Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, *etc.* Furthermore, the I/O devices 510 may also include output devices, for example but not limited to, a printer, display, *etc.* Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 or the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The above describe embodiments enable identification of unconstrained modes using transformation to a reduced stiffness matrix, providing performance orders of magnitude faster compared to evaluating singular modes for the original stiffness matrix. The transformation operations are fast and robust. The embodiments provide the ability to identify unconstrained modes very quickly, making it practical for simulation software to automatically identify these modes by default without the simulation analyst experiencing a noticeable delay. Consistently bringing any unconstrained modes to the attention of the simulation analyst or having the software automatically stabilize these modes increases the likelihood of a successful simulation and makes the simulation analyst more productive and satisfied with the simulation software.

Modeling errors leading to unconstrained displacement modes commonly occur for both inexperienced and experience simulation analysts. Even experienced simulation analysts who are accustomed to working through such issues, will appreciate better assistance from the software in this regard. Previously, inexperienced simulation analysts experiencing simulation failures due to unconstrained displacement modes may have come to the conclusion that simulation software is too difficult to use and give up. Under the present embodiments they may be more likely to have a good experience with simulation software. The benefits of the present invention will be particularly appreciated for analysists working with complex finite element models such as assemblies with tens of parts, where the relationship between parts sometimes becomes difficult to comprehend and cumbersome to track. Using systems described under the embodiments, analysts can readily identify parts within an assembly that are unstable in one or more directions.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A computer implemented method for detecting an unconstrained or low-stiffness connection between parts of an initial finite element (FE) model in a computer aided drafting (CAD) application, comprising the steps of:

   transforming a stiffness matrix of the initial FE model to a reduced stiffness matrix;
   determining a singular mode in the reduced stiffness matrix; and
   identifying the singular mode as corresponding to an unconstrained or low-stiffness connection between parts of the FE model.

2. The method of claim 1, further comprising the step of receiving a resolved initial FE model based on the identifying the unconstrained or low-stiffness connection between parts of the initial FE model.

3. The method of claim 2, further comprising the step of performing a simulation of a stiffness matrix of the resolved initial FE model.

4. The method of any of claims 1 to 3, wherein transforming the stiffness matrix of the initial FE model to a reduced stiffness matrix further comprises the steps of:

    introducing a single representative node with six degrees of freedom for each three-dimensional part of the initial FE model and three degrees of freedom for each two-dimensional part of the initial FE model representing translational and rotational motion of each part;
    constraining each part not to displace;
    transforming a finite element stiffness matrix of the constrained parts to eliminate original degrees of freedom in favor of degrees of freedom of the representative nodes; and
    assembling a transformed element stiffness matrix to determine a reduced stiffness matrix.

5. The method of any of claims claim 1 to 4, further comprising the step of creating a computer aided drafting (CAD) representation of a mechanical assembly.

6. The method of any of claims 1 to 5, further comprising the step of creating the initial FE model of the assembly.

7. The method of any of claim 1 to 6, further comprising the step of submitting the initial FE model for FE simulation.

8. The method of any of claims 1-7, further comprising the step of notifying a user of the CAD application of the identified unconstrained mode.

9. The method of any of claims 1 to 8, further comprising the step of resolving the at least one unconstrained or low-stiffness connection between parts in the initial FE model based on the identified unconstrained or low-stiffness connection between parts of the first FE model.

10. The method of claim 4, further comprising the steps of:

    treating each part as rigid with the representative node acting as a rigid body reference; and
    iterating over finite element entities associated with connections between parts and/or ground.

11. The method of claim 10, further comprising the steps of:

    converting an element stiffness matrix into a translation and rotation matrix involving only translations and rotations of reference points;
    incorporating the translation and rotation matrix into a global stiffness matrix; and
    performing a singular value decomposition of the global stiffness matrix.

12. The method of claim 11, further comprising the steps of:

    detecting a small or zero modal stiffness in an output of the singular value decomposition; and
    reporting the corresponding mode shape output from the singular value decomposition and an indication of a mode to be stabilized to a user of the CAD application.

13. A computer program comprising instructions for performing the method of any one of claims 1 to 12.

14. A computer-readable data storage medium having recorded thereon the computer program of claim 13.

15. A computer system comprising a processor coupled to a memory, the memory having recorded thereon the computer program of claim 13.

**FIG. 1A**

**FIG. 1B**

Introduce a single representative node with six degrees of freedom for each three-dimensional part and three degrees of freedom for each two-dimensional part, representing translational and rotational motion of each part
210

Temporarily constrain each part not to deform
220

Transform the element stiffness matrices of the parts to eliminate original degrees of freedom in favor of degrees of freedom of representative nodes
230

Assemble a transformed element stiffness matrix for each part to determine a reduced stiffness matrix
240

200

**FIG. 2**

**FIG. 3**

400

Create a CAD representation of an assembly
410

Create a finite element model of the assembly
420

Submit the FE model for FE simulation
430

Report issue to user; user modifies FE model
440

Simple modeling issues detected?
435

yes

no

Proceed with FE simulation
450

User Diagnoses and modifies FE model
460

Successful Simulation?
455

no

yes

Analyze simulation results
470

**FIG. 4**

Create a representative reference point per part to quickly identify unconstrained motion and low-stiffness connections, treating each part as rigid with the points acting a rigid body reference.
<u>610</u>

Iterate over finite element entities associated with connections between parts and/or a part to connecting ground.

Consider these connections to be enforced with a finite stiffness. Perform standard transformations of the form

$$K' = T^T KT$$

to convert element stiffness matrices into matrices involving only translations and rotations of reference points. Assemble these contrbutions into a global stiffness matrix involving only translations and rotations of part reference points.
<u>625</u>

<u>620</u>

Perform a standard singular value decomposition of the global stiffness matrix involving only translations and rotations of the part reference points.
<u>630</u>

Determine whether a modal stiffness in the singular value decomposition output is zero or small. If so, report the corresponding mode shape output from the singular value decomposition to the user, indicatIng the mode to be stabilized.
<u>640</u>

600

# FIG. 5

```
                                    ┌──────────────────┐
                                    │  SOFTWARE        │
                                    │     508          │
                                    ├──────────────────┤
                                    │   O/S            │
   ┌──────────┐    ┌──────────┐     │   520            │
   │ STORAGE  │    │PROCESSOR │     └──────────────────┘
   │ DEVICE   │    │   502    │      MEMORY
   │   504    │    │          │        506
   └────╨─────┘    └────╨─────┘     └────╨─────┘
        ║               ║                ║
═══════╬═══════════════╬════════════════╬═══════════
              LOCAL BUS  512
        ║
   ┌────╨─────┐
   │ INPUT / OUTPUT │
   │  DEVICES  │
   │   510     │
   └──────────┘
```

500

**FIG. 6**

Europäisches
Patentamt

European
Patent Office

Office européen
des brevets

# EUROPEAN SEARCH REPORT

Application Number

**EP 21 21 5661**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lepi Steven: "Practical Guide to Finite Elements: A Solid Mechanics Approach" In: "Practical Guide to Finite Elements: A Solid Mechanics Approach", 25 November 2020 (2020-11-25), CRC Press, XP055917593, ISBN: 978-1-000-14590-8 pages 1-544, | 1-10, 13-15 | INV. G06F30/23 ADD. G06F111/04 G06F111/10 |
| A | * page 158 * * the whole document * | 11,12 | |
| X | Msc Nastran: "[Extract] MSC Nastran 2018 Linear Static Analysis User's Guide", , 10 November 2017 (2017-11-10), pages 1-759, XP055917588, Retrieved from the Internet: URL:https://mscsoftware.force.com/customers/s/article/msc-nastran-2018-linear-static-analysis-user-s-guide-doc11513 [retrieved on 2022-05-03] | 1-10, 13-15 | |
| A | * part 6 * * part 12; page 497, paragraph 1 * * the whole document * | 11,12 | TECHNICAL FIELDS SEARCHED (IPC) G06F |

The present search report has been drawn up for all claims

| Place of search | Date of completion of the search | Examiner |
|---|---|---|
| Munich | 5 May 2022 | Dapp, Wolfgang |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBERT D. COOK.** Concepts and Applications of Finite Element Analysis. John Wiley & Sons, 1981, 159-161